# EUROPÄISCHE PATENTSCHRIFT

(11) **EP 0 965 262 B1**
(45) Veröffentlichungstag und Bekanntmachung des Hinweises auf die Patenterteilung: **02.04.2003**
(21) Anmeldenummer: 99110734.3
(22) Anmeldetag: 04.06.1999
(51) Int. Cl.: A01D 69/08, F16D 3/18, A01D 78/10

(54) **Heuwerbungsmaschine mit wenigstens zwei als Rechkreisel aufgeführten Arbeitsorganen**
Haymaking machine comprising at least two rake members
Machine de fenaison comportant au moins deux membres de ratissage

(30) Priorität: 19.06.1998 DE 19827401
(43) Veröffentlichungstag der Anmeldung: 22.12.1999
(73) Patentinhaber: CLAAS Saulgau GmbH, 88340 Bad Saulgau (DE)
(72) Erfinder: Deni, Franz, 88348 Saulgau (DE)

(56) Entgegenhaltungen:
- EP-A- 0 296 666
- EP-A- 0 370 933
- FR-A- 1 251 794

## Beschreibung

Die Erfindung betrifft eine Heuwerbungsmaschine mit wenigstens zwei als Rechkreisel ausgeführten Arbeitsorganen gemäß dem Oberbegriff des Patentanspruchs 1.
Die Arbeitsorgane derartiger Heuwerbungsmaschinen sind um vertikale Achsen umlaufend an
Zwischenrahmen angeordnet, die gelenkig miteinander verbunden sind, so daß sie um in Fahrtrichtung verlaufende Achsen relativ zueinander verschwenkt werden können. Auf diese Weise sind die die Rechkreisel aufnehmenden Zwischenrahmen von einer Arbeits- in eine Transportstellung und umgekehrt verschwenkbar und außerdem können die mittels Laufrad am Boden abgestützten Arbeitsorgane unabhängig voneinander den vom jeweiligen Laufrad überfahrenen Bodenunebenheiten folgen.
In der französischen Patentschrift FR 1 251 794 ist eine aus gegeneinander verschwenkbaren Kupplungseinheiten bestehende Wellenkupplung bekannt, deren eine Kupplungseinheit auf einem Umkreis liegende horizontal angeordnete fingerförmige Eingriffselemente aufweist und deren Zwischenräume durch die an der anderen Kupplungseinheit radial nach außen verlaufenden Eingriffselemente durchsetzt werden, so daß die Achsen der Eingriffselemente senkrecht zueinander stehen. Jede Kupplungseinheit ist fest auf dem jeweiligen Ende der über die Kuppiung zu verbindenden Wellen angeordnet. Der Schwenkwinkel einer solchen Kupplungsausführung wird in Öffnungsrichtung der Kupplung nur durch konstruktive Gegebenheiten eingeschränkt und kann deutlich über 180° betragen. Hingegen endet die Bewegung in Schließrichtung der Kupplung dann, wenn die die Eingriffselemente tragenden Flansche beider Kupplungseinheiten aufeinanderliegen, so daß diese Kupplungsausführung an Heuwerbungsmaschinen der eingangs beschriebenen Gattung dazu führen würde, daß ein sogenannter negativer Schwenkwinkel, der dann notwendig wird, wenn ein Laufrad in eine Bodenvertiefung eintaucht nicht realisierbar ist. In der europäischen Patentschrift EP 370 933 wird dieser Mangel dadurch behoben, daß die beiden Kupplungseinheiten mit sehr langen auf jeweils einem Umkreis liegenden fingerförmigen Eingriffselementen versehen sind, wobei die Achsen der fingerförmigen Eingriffselemente beider Kupplungseinheiten bei geschlossener Kupplung parallel zueinander verlaufen. Eine derartig gestaltete Kupplung ist in der Lage bei Bodenvertiefungen auch einen negativen Schwenkwinkel zu realisieren. Dabei sind die fingerförmigen Eingriffselemente beider Kupplungseinheiten sehr hohen Belastungen ausgesetzt, da sie sich zur Vermeidung von Kollisionen mit dem Flansch der jeweils anderen Kupplungseinheit nur in ihrem vorderen Bereich berühren können, wodurch sich an ihrem gegenüberliegenden in den jeweiligen Kupplungsflansch mündenden Ende hoch beanspruchte Zonen ausbilden, die zum Verbiegen oder zum Bruch der fingerförmigen Eingriffselemente führen können. In der EP 370 933 wird zur Vermeidung derartiger Schäden u.a. eine Härtung der fingerförmigen Eingriffselemente, ein von der einfach herstellbaren Zylinderform abweichender belastungsgünstigerer Querschnitt der fingerförmigen Eingriffselemente und deren lösbare Verbindung mit dem Flansch der jeweiligen Kupplungseinheit vorgeschlagen. Durch diese, die Kupplungsausführung verteuernden Maßnahmen wird jedoch das Problem der hohen Belastung der langen fingerförmigen Eingriffselemente nicht beseitigt.
Der Erfindung liegt deshalb die Aufgabe zugrunde, eine Heuwerbungsmaschine gemäß dem
Oberbegriff des Anspruchs 1 so zu gestalten, daß auf konstruktiv einfache Weise eine raumsparende und kurzbauende Kupplung im Antriebsstrang zwischen den relativ zueinander bewegbaren Arbeitsorganen angeordnet ist, die eine bodenkopierende Bewegung der Arbeitsorgane und deren Verschwenken von einer Arbeits- in eine Transportstellung und umgekehrt ermöglicht und dabei die Eingriffselemente der die Kupplung bildenden Kupplungseinheiten niedrigen Belastungen und damit einem im Vergleich zum Stand der Technik geringeren Verschleiß unterliegen.
Erfindungsgemäß wird die Aufgabe durch eine Heuwerbungsmaschine mit den kennzeichnenden Merkmalen des Anspruchs 1 gelöst.
Durch die Verwendung von Kupplungseinheiten mit auf Umkreisen angeordneten Eingriffselementen, deren Achsen bei geschlossener Kupplung senkrecht zueinander angeordnet sind, wobei die Eingriffselemente der einen Kupplungseinheit in den Zwischenräumen der anderen Kupplungseinheit angeordnet sind und wenigstens eine der Kupplungseinheiten axial verschiebbar angeordnet ist, wird erreicht, daß beim Verschwenken einer der Kupplungseinheiten der sich dabei ergebende Abstand zur anderen Kupplungseinheit ausgeglichen werden kann, so daß auch belastungsgünstige kurze Eingriffselemente stets eine störungsfreie Energieübertragung gewährleisten.

In vorteilhafter Weise verfügen die Eingriffselemente der sternförmigen Kupplungseinheit über einen zylindrisch ausgeformten Kopf während die andere Kupplungseinheit mit einfach herstellbaren zylindrischen Eingriffselementen ausgerüstet ist, so daß stets eine Linienberührung zwischen den Eingriffselementen erreicht wird. Eine belastungsgünstige Weiterbildung dieser Ausführung wird dann erreicht, wenn die Eingriffselemente der sternförmigen Kupplungseinheit ebene Flanken aufweist und die zylindrischen Eingriffselemente über angearbeitete Auflageflächen verfügen, so daß die Linienberührung in eine die Lastverteilung günstiger beienflussende Flächenberührung gewandelt wird.

Damit die zusammenarbeitenden Kupplungseinheiten in jeder Winkelstellung sicher im Eingriff sind, erfolgt die axiale Verschiebbarkeit gegen die Wirkung eines elastischen Elements, daß im einfachsten Fall als Druckfeder ausgeführt ist.

Damit beim Eintauchen der Laufräder in extreme Bodenvertiefungen durch das Verschwenken des jeweiligen Rechkreisel-tragenden Zwischenrahmens Beschädigungen am Rechkreisel vermieden werden, wird der negative Schwenkwinkel in vorteilhafter Weise durch einen Anschlag begrenzt.

Eine vorteilhafte Weiterbildung dieses Anschlages wird dann erreicht, wenn er so ausgeführt ist, daß er beim Verschwenken einer Kupplungseinheit in die Transportstellung eine derartige axiale Verschiebung wenigstens einer Kupplungseinheit zuläßt, daß sich die der Schwenkachse beider Kupplungseinheiten gegenüberliegenden Eingriffselemente über einen größeren Schwenkbereich berühren, so daß auch in diesem Bereich eine sichere Energieübertragung und eine günstigere Lastverteilung auf die einzelnen Eingriffselemente erreicht wird.

Vorteilhafte Ausgestaltungen sind Gegenstand weiterer Unteransprüche und werden nachfolgend anhand eines in Zeichnungen dargestellten Ausführungsbeispiels näher erläutert.
Es zeigen
- Figur 1: eine Heuwerbungsmaschine in Arbeitsstellung (linke Seite) und Transportstellung

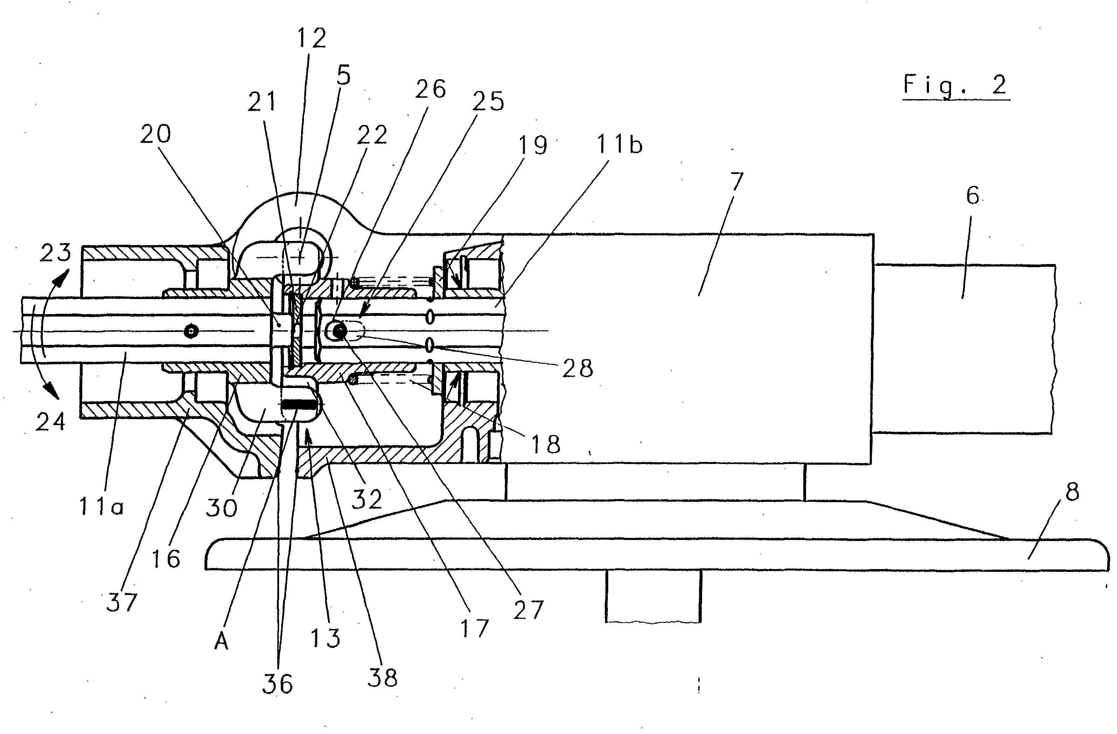

- Figur 2: eine Schnittdarstellung der erfindungsgemäßen Kupplung

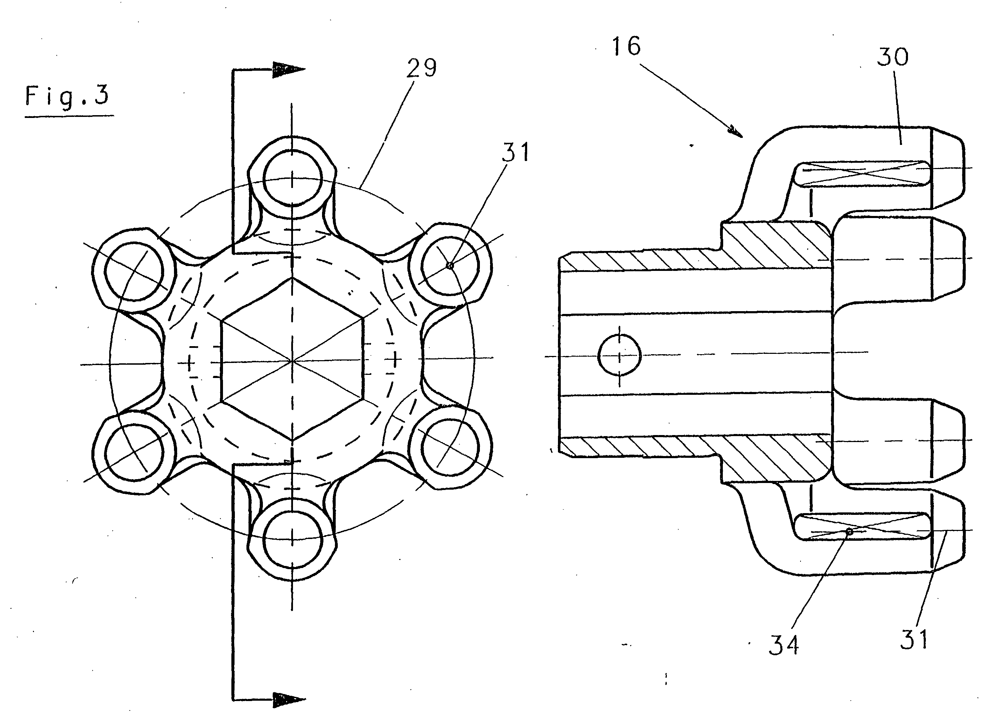

- Figur 3: zwei Ansichten der fingerförmige Eingriffselemente aufweisenden Kupplungseinheit
- Figur 4: zwei Ansichten der sternförmigen Kupplungseinheit

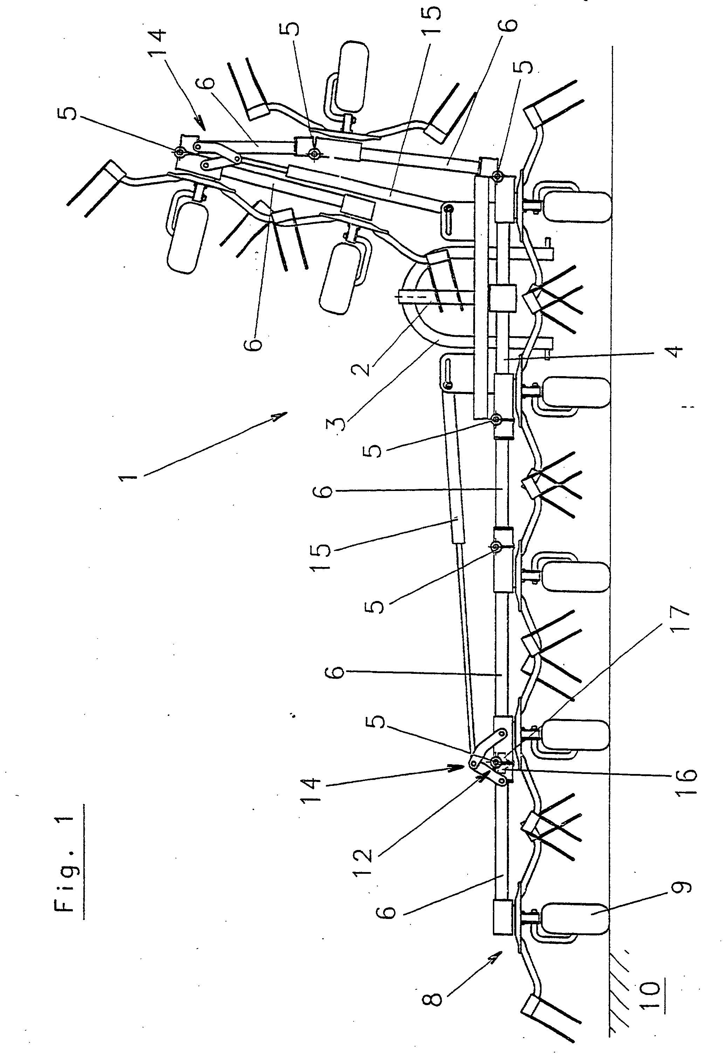

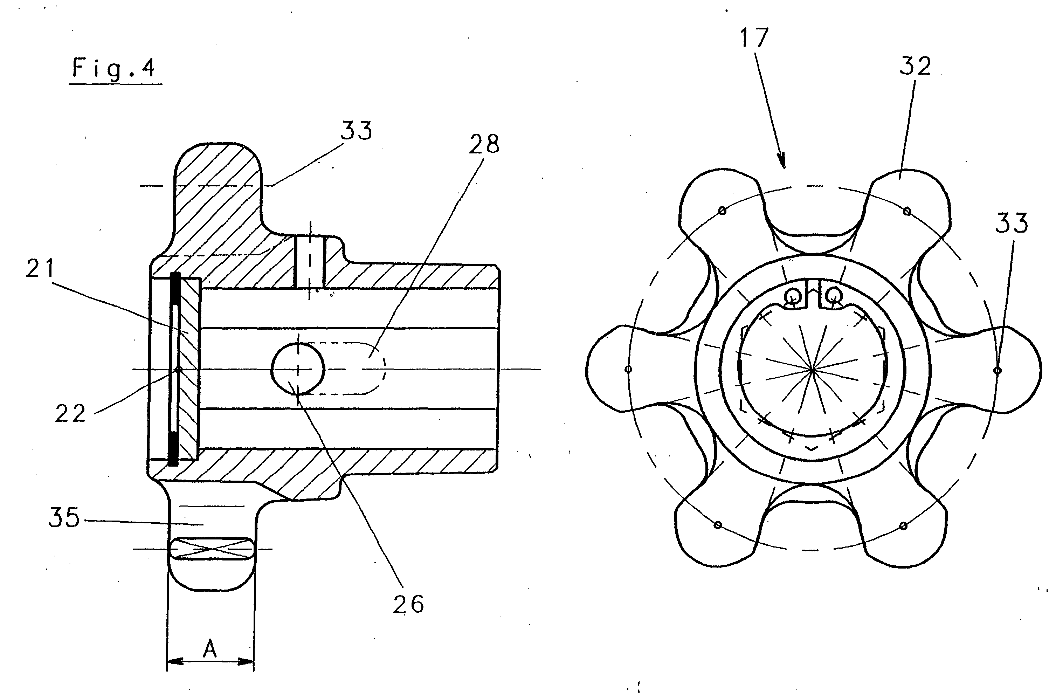

Die in Figur 1 in Arbeitsstellung (linke Seite) und Transportstellung dargestellte Heuwerbungsmaschine 1 ist zugfahrzeugseitig über einen Tragrahmen 2 schwenkbar mit einer Aufsatteleinrichtung 3 verbunden, die wiederum an ein nicht dargestelltes Zugfahrzeug adaptierbar ist. Der Tragrahmen 2 ist auf seiner der Aufsatteleinrichtung 3 abgewanden Seite mit einem nichtverschwenkbaren Mittelrahmen 4 verbunden, dem beidseitig um in Fahrtrichtung verlaufende Achsen 5 verschwenkbare Zwischenrahmen 6 zugeordnet sind, die mit an sich bekannten nicht näher dargestellten Getrieben 7 versehen sind, die untenseitig die als Rechkreisel 8 ausgeführten, um vertikale Achsen umlaufenden Arbeitsorgane aufnehmen, wobei jeder Rechkreisel 8 durch ein Laufrad 9 am Boden 10 abgestützt wird. Im dargestellten Ausführungsbeispiel sind den Zwischenrahmen 6 je nach Ausführungsform eine unterschiedliche Zahl von Rechkreiseln 8 zugeordnet. Da die Zuordnung der Rechkreisel 8 zu den verschwenkbaren Zwischenrahmen 6 nicht erfindungswesentlich ist, sei nur darauf verwiesen, daß sich die Erfindung auch auf jede andere, aus dem Stand der Technik bekannte Zuordnung bezieht.
Im Inneren der Zwischenrahmen 6 sind zur Energieübertragung Wellen 11a, 11b angeordnet, die im Bereich der Gelenke 12 der Zwischenrahmen 6 durch die erfindungsgemäße Kupplung 13 miteinander verbunden sind. Im beschriebenen Ausführungsbeispiel sind am nicht verschwenkbaren Mittelrahmen 4 beidseitig je drei Zwischenrahmen 6 adaptiert, wobei die beiden jeweils außen liegenden Zwischenrahmen 6 über eine zweigliedrige Koppel 14 mit einem anderenends gelenkig am nicht verschwenkbaren Mittelrahmen 4 angebrachten Verstellmittel 15, vorzugsweise ein Hubzylinder verbunden sind, so daß die an den Zwischenrahmen 6 angeordneten Rechkreisel 8 von einer Arbeits- in eine Transportstellung und umgekehrt verschwenkbar sind. Die gelenkige Verbindung jedes Verstellmittels 15 mit dem Mittelrahmen 4 ist so gestaltet, daß das Verstellmittel 15 sowohl eine Schwenk- als auch Schubbewegung ausführen kann. Auf diese Weise wird ermöglicht, daß beim Überfahren von Bodenunebenheiten durch die an den Rechkreiseln 8 angeordneten Laufräder 9 die entsprechenden Zwischenrahmen 6 eine Schwenkbewegung um die jeweilige Achse 5 ausführen, wodurch die Rechkreisel 8 bodenkopierend arbeiten, so daß deren Beschädigungsrisiko durch ungewollten Kontakt mit dem Boden 10 und eine die Qualität des Erntegutes verschlechternde Verschmutzung aufgrund des Aufwirbelns des Bodens 10 durch die Rechkreisel 8 reduziert wird. Da die Verwendung der erfindungsgemäßen Kupplung 12 auch nicht an die beschriebene Ausführung zur Bodenanpassung und zum Verschwenken in Transport- oder Arbeitsstellung gebunden ist, kann sie auch an jeder anderen aus dem Stand der Technik bekannten landwirtschaftlichen Arbeitsmaschine eingesetzt werden, die über verschwenkbare Arbeitsorgane verfügt.
Im Bereich der die Zwischenrahmen 6 verschwenkbar miteinander verbindenden Gelenke 12 sind die benachbarten Enden der Wellen 11a, 11b mit Kupplungseinheiten 16, 17 der erfindungsgemäßen Kupplung 13 dergestalt versehen, daß die Kupplungseinheit 16 fest mit der Welle 11a verbunden ist, während die Kupplungseinheit 17 auf der Welle 11b axial verschoben werden kann. Die axiale Verschiebung der Kupplungseinheit 17 erfolgt gegen die Wirkung eines als Druckfeder 18 ausgeführten elastischen Elements, welches im rückwärtigen Bereich der Kupplungseinheit 17 gegen einen Anschlag 19 arbeitend angeordnet ist. Die Welle 11a weist an ihrer der Kupplungseinheit 17 zugewanden Seite einen Absatz 20 auf, der sich an einem als axial gesicherte, bei Verschleiß austauschbare Scheibe 21 ausgeführten Anschlag der Kupplungseinheit 17 abstützt, so daß der Absatz 20 über Scheibe 21 im Kontaktbereich 22 beim Verschwenken der Kupplungseinheit 16 in Pfeilrichtung 23 oder 24 die axiale Verschiebung der Kupplungseinheit 17 hervorruft. Aufgrund der mittigen Anordnung des Absatzes 20 und der Scheibe 21 wird erreicht, daß beim Verschwenken der Kupplungseinheit 16 in Pfeilrichtung 24 um Achse 5 der Weg den die Kupplungseinheit 17 in axialer Richtung zurücklegt gering ist, da sich dieser Weg in dem Maß verringer wie der Abstand zwischen Schwenkachse 5 und Kontaktbereich 22 abnimmt und zusätzlich wird bei mittig angeordnetem Kontaktbereich 22 dafür gesorgt, daß beim axialen Verschieben der Kupplungseinheit 17 kein Verkanten auftreten kann. Damit beim Verschwenken der Kupplungseinheit 16 in Pfeilrichtung 24 eine Beschädigung der Rechkreisel 8 vermieden wird, ist die axiale Verschiebbarkeit der Kupplungseinheit 17 durch einen Anschlag 25 begrenzt. Im einfachsten Fall wird der Anschlag 25 von einem in Welle 11b fixierten stiftförmigen Element 27 gebildet, daß eine in Kupplungselement 17 befindliche Öffnung 26 durchsetzt. Das stiftförmige Element 27 liegt dabei mit seiner dem Kontaktbereich 22 abgewanden Seite an der Öffnung 26 an, so daß nur beim Verschwenken der Kupplungseinheit 16 in Pfeilrichtung 24 eine axiale Verschiebung des Kupplungseinheit 17 erfolgt. Wird die Öffnung 26 hingegen als Langloch 28 ausgeführt und das stiftförmige Element 27 innerhalb dieses Langloches so angeordnet, daß es bei geschlossener Kupplung 13 nicht an einer Seite des Langloches anliegt, wird die Kupplungseinheit 17 auch beim Verschwenken der Kupplungseinheit 16 in Pfeilrichtung 23 axial auf Welle 11b verschoben.
Die Kupplungseinheit 16 verfügt über fingerförmige zylindrische, auf einem Umkreis 29 liegende Eingriffselemente 30, deren Achsen 31 bei geschlossener Kupplung 13 in Richtung der Wellen 11a, 11b verlaufen. Die Kupplungseinheit 17 weist sternförmig, d.h. radial von der Kupplungseinheit 17 weg verlaufend angeordnete Eingriffselemente 32 auf, die beim Zusammenwirken mit Kupplungseinheit 16 die Bereiche zwischen den fingerförmigen Eingriffselementen 30 derart durchsetzen, daß beim Verschwenken der Kupplungseinheit 16 um Achse 5 in Pfeilrichtung 23 (positiver Schwenkwinkel) oder 24 (negativer Schwenkwinkel) die Eingriffselemente 30, 32 beider Kupplungseinheiten 16, 17 weiterhin energieübertragend zusammenarbeiten. Begrenzt wird dieser Bereich beim Verschwenken in Transportstellung durch Anschlag 25 und beim Verschwenken in Richtung Boden 10 durch das Aufeinandertreffen der Auflageflächen 36 der um Achse 5 drehbaren, die Kupplungseinheiten 13, 17 ummantelnden Verkleidungen 37, 38.
Zur Verringerung der zwischen den sich berührenden Eingriffselementen 30, 32 auftretenden Flächenpressung sind die Eingriffselemente 32 in ihrem äußeren Bereich um eine parallel zur Achse 31 der Eingriffselemente 30 verlaufende Achse 33 ebenfalls zylindrisch ausgeformt, so daß im Bereich A eine Linienberührung zwischen den Eingriffselementen 30, 32 erreicht wird. In vorteilhafter Weise können die Flanken 35 der Eingriffselemente der sternförmigen Kupplungseinheit auch eben ausgeführt und die zylindrischen Eingriffselemente 30 im Eingriffsbereich mit Auflageflächen 34 versehen sein, so daß dann die Belastung der Eingriffselemente 30, 32 weiter reduzierende Flächenberührung zwischen ihnen auftritt. Zur Verbesserung des Kontaktes der Auflageflächen 34 mit den Flanken 35 sind die Flanken 35 in radialer Richtung so geneigt, daß sich ihre gedachten Verlängerungen (Figur 4) im Drehzentrum der Kupplungseinheit 17 schneiden.
Verschwenkt Kupplungseinheit 16 entsprechend Pfeil 23 in Transportstellung, so kann bei einem mit Langloch 28 ausgeführten Anschlag 25 erreicht werden, daß eine axiale Verschiebung der Kupplungseinheit 17 in Richtung Kupplungseinheit 16 erfolgt, so daß die der Schwenkachse 5 abgewanden Eingriffselemente 30, 32 der Kupplungseinheiten 16, 17 über einen größeren Schwenkbereich der Kupplungseinheit 16 miteinander im Eingriff sind, so daß eine günstigere Lastverteilung auf die Eingriffselemente 30, 32 und eine sicherere Energieübertragung beim Verschwenken in Transportstellung erreicht wird. Das Verschwenken der Kupplungseinheit 16 in Pfeilrichtung 24 zur besseren Anpassung der Rechkreisel 8 an Bodenunebenheiten erfolgt hingegen, wenn erfindungsgemäß Kupplungseinheit 17 in axialer Richtung gegen die Wirkung des elastischen Elements 18 von Kupplungseinheit 16 weg bewegt wird, wobei die axiale Verschiebbarkeit von Kupplungseinheit 17 durch die Auflageflächen 36 der Verkleidungen 37, 38 begrenzt wird. Die beschriebene axiale Verschiebbarkeit ist nicht auf Kupplungseinheit 17 beschränkt. In gleicher Weise kann auch Kupplungseinheit 16 axial verschiebbar auf Welle 11a angeordnet sein, wobei Kupplungseinheit 17 entweder fest mit Welle 11b oder ebenfalls wie beschrieben axial verschiebbar auf dieser angeordnet ist.

### Bezugszeichenliste

- 1: Heuwerbungsmaschine
- 2: Tragrahmen
- 3: Aufsatteleinrichtung
- 4: Mittelrahmen
- 5: Achse
- 6: Zwischenrahmen
- 7: Getriebe
- 8: Rechkreisel
- 9: Laufrad
- 10: Boden
- 11a, 11b: Welle
- 12: Gelenk
- 13: Kupplung
- 14: zweigliedrige Koppel
- 15: Hubzylinder
- 16: Kupplungseinheit
- 17: Kupplungseinheit
- 18: Druckfeder
- 19: Anschlag
- 20: Absatz
- 21: Scheibe
- 22: Kontaktbereich
- 23: Pfeilrichtung
- 24: Pfeilrichtung
- 25: Anschlag
- 26: Öffnung
- 27: stiftförmiges Element
- 28: Langloch
- 29: Umkreis
- 30: Eingriffselement
- 31: Achse
- 32: Eingriffselement
- 33: Achse
- 34: Auflagefläche
- 35: Flanke
- 36: Auflagefläche
- 37: Verkleidung
- 38: Verkleidung

- A: Berührungsbereich der Eingriffselemente

## Patentansprüche

1. Heuwerbungsmaschine mit wenigstens zwei als Rechkreisel (8) ausgeführten Arbeitsorganen, die von an einem Tragrahmen (2, 4) angeordneten Zwischenrahmen (6) aufgenommen und von wenigstens einem Laufrad (9) auf dem Boden (10) abgestützt werden, wobei die Zwischenrahmen (6) zur Kopierung des durch die Laufräder (9) abgetasteten Bodenprofils und zur Verschwenkung von einer Arbeits- in eine Transportstellung und umgekehrt um in Fahrtrichtung verlaufende Achsen (5) schwenkbar miteinander verbunden sind und die die zur Übertragung der Antriebsenergie auf die um vertikale Achsen umlaufenden Rechkreisel (8) notwendigen Übertragungsglieder des Antriebsstranges, insbesondere Wellen (11a, 11b) und Getriebe (7) aufnehmen, die im Bereich der gelenkigen Verbindung benachbarter Zwischenrahmen (6) durch eine aus zwei über Eingriffselemente (30, 32) zusammenarbeitende Kupplungseinheiten (16, 17) bestehende Kupplung (13) miteinander verbunden sind und eine Verlängerung der Schwenkachse (5) die Eingriffselemente (30, 32) durchsetzt, **dadurch gekennzeichnet, daß** die eine Kupplungseinheit (16) über fingerförmige Eingriffselemente (30) verfügt, deren Achsen (31) horizontal in Richtung der als Wellen (11a, 11b) ausgeführten Übertragungsglieder verlaufen, und die andere Kupplungseinheit (17) sternförmig ausgeführt ist, wobei die diese Sternform bildenden Eingriffselemente (32) radial von der Kupplungseinheit (17) weg verlaufen und beim Zusammenwirken beider Kupplungseinheiten (16, 17) die Bereiche zwischen den fingerförmigen Eingriffselementen (30) derart durchsetzen, daß beim Verschwenken einer der Kupplungseinheiten (16, 17) in Richtung Boden (10) oder in die Transportstellung die Eingriffselemente (30, 32) beider Kupplungseinheiten (16, 17) weiterhin energieübertragbar zusammenarbeiten, wobei zur Erreichung einer Belastungsreduzierung der energieübertragenden Eingriffselemente (30, 32) wenigstens eine der Kupplungseinheiten (16, 17) axial verschiebbar auf der ihr zugeordneten Welle (11a, 11b) angeordnet ist.

2. Heuwerbungsmaschine nach Anspruch 1,
**dadurch gekennzeichnet,**
**daß** die Flanken (35) der Eingriffselemente (32) der sternförmigen Kupplungseinheit (17) so geformt sind, daß im Zusammenwirken mit den zylindrisch ausgeführten fingerförmigen Eingriffselemente (30) der Kupplungseinheit (16) Linienberührung zwischen den Eingriffselementen (30, 32) der Kupplungseinheiten (16, 17) auftritt.

3. Heuwerbungsmaschine nach Anspruch 1,
**dadurch gekennzeichnet,**
**daß** die Eingriffselemente (32) der sternförmigen Kupplungseinheit (17) ebene Flanken (35) und die fingerförmigen Eingriffselemente (30) der Kupplungseinheit (16) zylindrischen Querschnitt aufweisen, wobei im Eingriffsbereich beider Kupplungseinheiten (16, 17) die fingerförmigen Eingriffselemente (30) über angearbeitete Auflageflächen (34) verfügen, so daß Flächenberührung zwischen den Eingriffselementen (30, 32) der Kupplungseinheiten (16, 17) auftritt.

4. Heuwerbungsmaschine nach Anspruch 3,
**dadurch gekennzeichnet,**
**daß** die Flanken (35) der Eingriffselemente (32) in radialer Richtung so geneigt sind, daß sich ihre gedachten Verlängerungen in einem Punkt innerhalb des Kupplungsteils (17) schneiden.

5. Heuwerbungsmaschine nach einem oder mehreren der vorhergehenden Ansprüche,
**dadurch gekennzeichnet,**
**daß** jede axial verschiebbare Kupplungseinheit (16, 17) gegen die Wirkung eines elastischen Elements (18) verschoben wird.

6. Heuwerbungsmaschine nach Anspruch 5,
**dadurch gekennzeichnet,**
**daß** das elastische Element (18) eine an sich bekannte Druckfeder ist.

7. Heuwerbungsmaschine nach einem oder mehreren der vorhergehenden Ansprüche,
**dadurch gekennzeichnet,**
**daß** die axiale Verschiebbarkeit jeder verschiebbaren Kupplungseinheit (16, 17) durch wenigstens einen Anschlag (25) begrenzt wird.

8. Heuwerbungsmaschine nach Anspruch 7,
**dadurch gekennzeichnet,**
**daß** dieser Anschlag (25) durch ein in einer Öffnung (26) oder in einem Langloch (28) der axial verschiebbaren Kupplungseinheit (16, 17) laufendes und in einem Übertragungsglied des Antriebsstranges (11a, 11b) fixiertes Element (27) gebildet wird.

9. Heuwerbungsmaschine nach einem oder mehreren der vorhergehenden Ansprüche,
**dadurch gekennzeichnet,**
**daß** die Langlochführung (28) zur Erreichung eines ständig großen Überlappungsbereiches der Eingriffselemente (30, 32) der zusammenarbeitenden Kupplungseinheiten (16, 17) so ausgeführt ist, daß bei negativem oder positivem Schwenkwinkel (23, 24) einer der beiden Kupplungseinheiten (16, 17) eine axiale Verschiebung der verschiebbaren Kupplungseinheit (16, 17) möglich ist.

10. Heuwerbungsmaschine nach einem oder mehreren der vorhergehenden Ansprüche,
**dadurch gekennzeichnet,**
**daß** die axiale Verschiebbarkeit wenigstens einer Kupplungseinheit (16, 17) durch einen an der nicht mit dieser Kupplungseinheit (16, 17) verbundenen Welle (11a, 11b) angearbeiteten Absatz (20) realisiert wird.

## Claims

1. A hay making machine with at least two working implements which are in the form of raking rotors (8) and which are carried by intermediate frames (6) arranged on a support frame (2, 4) and are supported on the ground (10) by at least one wheel (9), wherein the intermediate frames (6) are connected together pivotably about axes (5) extending in the direction of travel for copying the ground profile sensed by the wheels (9) and for pivotal movement from a working position into a transportation position, and accommodate the transmission members of the drive train, in particular shafts (11a, 11b) and transmission means (7), which are necessary for transmission of the drive energy to the raking rotors (8) rotatable about vertical axes and which are connected together in the region of the hinged connection of adjacent intermediate frames (6) by a coupling (13) comprising two coupling units (16, 17) co-operating by way of engagement elements (30, 32), and a prolongation of the pivot axis (5) passes through the engagement elements (30, 32), **characterised in that** the one coupling unit (16) has finger-shaped engagement elements (30) whose axes (31) extend horizontally in the direction of the transmission members which are in the form of shafts (11a, 11b), and the other coupling unit (17) is of a star configuration, wherein the engagement elements (32) forming said star configuration extend radially away from the coupling unit (17) and upon co-operation of the two coupling units (16, 17) pass through the regions between the finger-shaped engagement elements (30) in such a way that in the pivotal movement of one of the coupling units (16, 17) in the direction of the ground (10) or into the transportation position the engagement elements (30, 32) of the two coupling units (16, 17) still cooperate in such a way that they can transmit energy, wherein to achieve a loading reduction in the energy-transmitting engagement elements (30, 32) at least one of the coupling units (16, 17) is arranged axially displaceably on the shaft (11a, 11b) associated therewith.

2. A hay making machine according to claim 1 **characterised in that** the flanks (35) of the engagement elements (32) of the star-shaped coupling unit (17) are so shaped that in a condition of co-operation with the finger-shaped engagement units (30), of a cylindrical configuration, of the coupling unit (16), line contact occurs between the engagement elements (30, 32) of the coupling units (16, 17).

3. A hay making machine according to claim 1 **characterised in that** the engagement elements (32) of the star-shaped coupling unit (17) have flat flanks (35) and the finger-shaped engagement elements (30) of the coupling unit (16) are of cylindrical cross-section, wherein in the engagement region of the two coupling units (16, 17) the finger-shaped engagement elements (30) have contact surfaces (34) worked thereon so that surface contact occurs between the engagement elements (30, 32) of the coupling units (16, 17).

4. A hay making machine according to claim 3 **characterised in that** the flanks (35) of the engagement elements (32) are so inclined in the radial direction that the notional prolongations thereof intersect at a point within the coupling portion (17).

5. A hay making machine according to one or more of the preceding claims **characterised in that** each axially displaceable coupling unit (16, 17) is displaced against the action of an elastic element (18).

6. A hay making machine according to claim 5 **characterised in that** the elastic element (18) is a per se known compression spring.

7. A hay making machine according to one or more of the preceding claims **characterised in that** the axial displaceability of each displaceable coupling unit (16, 17) is limited by at least one abutment (25).

8. A hay making machine according to claim 7 **characterised in that** said abutment (25) is formed by an element (27) which moves in an opening (26) or in a slot (28) in the axially displaceable coupling unit (16, 17) and is fixed in a transmission member of the drive train (11a, 11b).

9. A hay making machine according to one or more of the preceding claims **characterised in that** the slot guide (28) to provide a constantly large overlap region of the engagement elements (30, 32) of the co-operating coupling units (16, 17) is so designed that with a negative or positive pivotal angle (23, 24) of one of the two coupling units (16, 17) axial displacement of the displaceable coupling unit (16, 17) is possible.

10. A hay making machine according to one or more of the preceding claims **characterised in that** the axial displaceability of at least one coupling unit (16, 17) is implemented by a step (20) worked on the shaft (11a, 11b) not connected to said coupling unit (16, 17).

## Revendications

1. Machine de fenaison comprenant au moins deux organes de travail sous la forme de râteaux rotatifs (8), qui sont portés par des châssis intermédiaires (6) eux-mêmes disposés sur un châssis porteur (2, 4) et prennent appui sur le sol (10) par l'intermédiaire d'au moins une roue porteuse (9), les châssis intermédiaires (6), pour épouser le profil du sol palpé par les roues porteuses (9) et pour le pivotement d'une position de travail dans une position de transport et inversement, étant liés entre eux avec possibilité de pivotement autour d'axes (5) orientés dans la direction de déplacement, et lesdits châssis intermédiaires recevant les éléments de transmission de la chaîne d'entraînement nécessaires à la transmission de l'énergie d'entraînement aux râteaux rotatifs (8) tournant autour d'axes verticaux, en particulier dies arbres (11a, 11b) et des réducteurs (7), qui, dans la région de la liaison articulée entre des châssis intermédiaires (6) voisins, sont liés par un accouplement (13) formé de deux unités d'accouplement (16, 17) associées par l'intermédiaire d'éléments d'engrènement (30, 32), un prolongement de l'axe de pivotement (5) traversant les éléments d'engrènement (30, 32), **caractérisée en ce que** l'une des unités d'accouplement (16) est pourvue d'éléments d'engrènement (30) en forme de doigts, dont les axes (31) s'étendent horizontalement en direction des éléments de transmission conformés en arbres (11a, 11b), et l'autre unité d'accouplement (17) est conformée en étoile, les éléments d'engrènement (32) qui constituent cette forme d'étoile s'étendant dans la direction radiale, à partir de l'unité d'accouplement (17) et lesdits éléments d'engrènement traversant les zones entre les éléments d'engrènement (30) en forme de doigts, lorsque les deux unités d'accouplement (16, 17) coopèrent, de telle sorte que, lors du pivotement de l'une des unités d'accouplement (16, 17) en direction du sol (10) ou dans la position de transport, les éléments d'engrènement (30, 32) des deux unités d'accouplement (16, 17) continuent à coopérer pour assurer la transmission d'énergie, au moins une des unités d'accouplement (16, 17), pour réduire la charge des éléments d'engrènement (30, 32) assurant la transmission d'énergie, étant montée coulissante dans la direction axiale sur l'arbre (11a, 11b) associé.

2. Machine de fenaison selon la revendication 1, **caractérisée en ce que** les flancs (35) des éléments d'engrènement (32) de l'unité d'accouplement (17) en forme d'étoile sont conformés de manière à obtenir, lors de la coopération avec les éléments d'engrènement (30) en forme de doigts cylindriques de l'unité d'accouplement (16), un contact linéaire entre les éléments d'engrènement (30, 32) des unités d'accouplement (16, 17).

3. Machine de fenaison selon la revendication 1, **caractérisée en ce que** les éléments d'engrènement (32) en forme d'étoile de l'unité d'accouplement (17) présentent des flancs (35) plans et les éléments d'engrènement (30) en forme de doigts de l'unité d'accouplement (16) présentent une section transversale cylindrique, les éléments d'engrènement (30) en forme de doigts, dans la zone d'engrènement des deux unités d'accouplement (16, 17) présentant des surfaces d'appui (34) de telle sorte qu'il existe un contact surfacique entre les éléments d'engrènement (30, 32) des unités d'accouplement (16, 17).

4. Machine de fenaison selon la revendication 3, **caractérisée en ce que** les flancs (35) des éléments d'engrènement (32) sont inclinés dans la direction radiale de manière telle que leurs prolongements imaginaires se coupent en un point situé à l'intérieur de l'unité d'accouplement (17).

5. Machine de fenaison selon une ou plusieurs des revendications précédentes, **caractérisée en ce que** chaque unité d'accouplement (16, 17) montée coulissante dans la direction axiale est déplacée à l'encontre de l'action d'un élément élastique (18).

6. Machine de fenaison selon la revendication 5, **caractérisée en ce que** l'élément élastique (18) est un ressort de compression connu en soi.

7. Machine de fenaison selon une ou plusieurs des revendications précédentes, **caractérisée en ce que** le coulissement axial de chacune des unités d'accouplement (16, 17) montées coulissantes dans la direction axiale est limité par au moins une butée (25).

8. Machine de fenaison selon la revendication 7, **caractérisée en ce que** la butée (25) est formée d'un élément (27) qui s'étend à travers une ouverture (26) ou une boutonnière dans l'unité d'accouplement (16, 17) montée coulissante dans la direction axiale et est fixé dans un élément de transmission de la chaîne d'entraînement (11a, 11b).

9. Machine de fenaison selon une ou plusieurs des revendications précédentes, **caractérisée en ce que** la boutonnière (28), pour obtenir un recouvrement constant des éléments d'engrènement (30, 32) des unités d'accouplement (16, 17) associées, est agencée de manière à permettre un déplacement axial de l'unité d'accouplement (16, 17) montée coulissante en présence d'un angle de pivotement (23, 24) négatif ou positif de l'une des deux unités d'accouplement (16, 17).

10. Machine de fenaison selon une ou plusieurs des revendications précédentes, **caractérisée en ce que** le coulissement axial d'au moins une unité d'accouplement (16, 17) est obtenu par un embout (20) usiné sur l'arbre (11a, 11b) qui n'est pas lié à cette unité d'accouplement (16, 17).
